# DEMANDE DE BREVET EUROPEEN

(11) **EP 1 746 806 A1**
(43) Date de publication de la demande: **24.01.2007**
(21) Numéro de dépôt: 06117576.6
(22) Date de dépôt: 20.07.2006
(51) Int. Cl.: H04L 29/08, H04L 29/06

(54) **Procédé et dispositif de connexion optimisée et sécurisée d'un terminal client de radiocommunication à un autre terminal distant**

(30) Priorité: 20.07.2005 FR 0507738
(71) Demandeur: Kerlink, 35700 Rennes (FR)
(72) Inventeur: MATHE, Jacques, 22710, PENVENAN (FR); GOUESBET, William, 35235, THORIGNE-FOUILLARD (FR); DELIBIE, Yannick, 35235, THORIGNE-FOUILLARD (FR); TRICOT, Stéphane, 22400, LAMBALLE (FR); DUBOURG, Ronan, 35530 Noyal Sur Vilaine (FR); BRIENT, Vincent, 35410, SAINT OUEN DES ALLEUX (FR); CRIBIER, Philippe, 35410, CHATEAUGIRON (FR); CAQUET, Jean-Christophe, 35830, BETTON (FR)
(74) Mandataire: Bioret, Ludovic

(57) **Abrégé**

L'invention concerne un procédé d'établissement d'une session de communication entre au moins un premier terminal client de radiocommunication comprenant des moyens d'accès à au moins un réseau de communication mobile et exécutant une application cliente, et au moins terminal distant de capture et/ou de mise à disposition de données d'information prédéterminées exécutant une application serveur, ladite application cliente et ladite application serveur formant une application distribuée.

Selon l'invention, ledit au moins un terminal distant de capture et/ou de mise à disposition de données d'information prédéterminées étant hébergé par un réseau de communication privé accessible d'une façon centralisée au moyen d'un terminal d'accès unique de supervision des communications, le procédé comporte au moins une étape de création d'un canal de communication logique temporaire pour l'échange d'au moins un message entre le terminal client et ledit au moins un terminal distant de capture et/ou de mise disposition de données d'information prédéterminées par l'intermédiaire du terminal d'accès et de supervision des communications, et l'étape de création tient compte d'au moins une politique prédéfinie de connexion du terminal client et/ou du terminal distant audit terminal d'accès et de supervision de communications.

## Description

### 1. Domaine de l'invention

Le domaine de l'invention est celui des radiocommunications, et par extension, des applications du type M2M (« machine à machine », ou « Machine to Machine » en anglais).

A titre informatif, les services M2M mis à disposition des utilisateurs s'appuient sur une communication, le plus généralement en mode point à point, de machine à machine, de mobile à machine et de machine à mobile.

Le M2M décrit donc d'une façon plus large, la mise en réseau de machines à distance, pour le support d'applications distribuées et communicantes permettant l'accès à de nouvelles catégories de services dans des domaines aussi variés que, à titre de simple exemple illustratif :
- des applications de contrôle et/ou surveillance à distance :
   o domotique appliquée aux panneaux et/ou affiches automatisés d'information et/ou de signalisation ;
   o automates de fabrication industrielle ;
- des applications de sécurité :
   o déclenchement et/ou gestion d'alarmes ;
   o domotique appliquée aux systèmes de sécurité (incendie, lutte contre l'intrusion, etc.) ;
   o gestion d'alarmes et/ou surveillance de patients (santé) ;
   o gestion/pilotage de système de localisation ;
   o surveillance de capitaux ;

- des applications de gestion de station météorologiques autonomes, de gestion de borne de secours d' autoroute ;
- des applications de gestion à distance de flotte de navires et/ou d'avions, et/ou de parc de véhicules de taxi, de location et/ou de transport de marchandises ;
- des applications de gestion et/ou de surveillance de distributeurs de boissons, nourriture, ou encore de parcmètres ou machines de loterie ;
- des applications de communication mobile.

Plus précisément, l'invention concerne la création de canaux de communication spécifiques entre des terminaux de radiocommunication le plus souvent itinérants, et des terminaux distants de capture et/ou de mise disposition de données d'information prédéterminées, sans considération des formats des données échangées entre les terminaux et/ou les applications communicantes qu'ils exécutent, et indépendamment de l'infrastructure réseau sous jacente mise en oeuvre.

### 2. Solutions de l'art antérieur et inconvénients de ces dernières

Si les réseaux de connexion physique (radio et filaire) sont de plus en plus performants, aussi bien en termes de technologies, que de vitesse et/ou de qualité de service, les nouvelles applications communicantes mises en oeuvre exigent d'échanger des informations avec de plus en plus de valeur ajoutée.

Un tel constat a donc amené certaines sociétés à concevoir un réseau de communication performant à la fois dédié et parfaitement adapté au support et à l'exploitation de telles applications distribuées.

Or, un inconvénient majeur d'une telle approche technique est lié au fait qu'investir dans un réseau propre et en supporter les coûts de fonctionnement humains et techniques représente un investissement technique et financier très important et le plus souvent en décalage avec les recettes financières obtenues de part l'exploitation des services, par exemple M2M, mis en oeuvre au travers les applications distribuées utilisant un tel réseau.

Ainsi, le retour sur investissement de telles infrastructures réseau s'inscrit tout au mieux sur une durée relativement importante, souvent incompatible en outre, avec la durée de vie de certaines des services utilisant cette infrastructure.

Pour tenter de pallier ce type d'inconvénient, des techniques d'interconnexion ont été développées sur la base de protocoles de transport standards, du type WEB, tels que http (pour « Hyper Texte Transfert Protocol » en anglais), TCP/IP (pour « Transfert Control Protocol / Internet Protocol » en anglais) ou FTP (pour « File Transfert Protocol » en anglais), ou bien encore de type WEB mobile, tel que le protocole WAP (pour « Wireless Application Protocol » en anglais).

Cependant, ces différents protocoles sont verbeux (protocole et encodage des données volumineux), et donc en inadéquation avec les caractéristiques d'un réseau mobile, bas débit et de coût « air time » élevé.

En outre, leur utilisation impose la mise en oeuvre d'une ou de plusieurs librairies propriétaires qui verrouille l'évolutivité et la portabilité des applications communicantes développées, ce qui constitue une entrave au développement plus important de ces dernières.

De plus, les mécanismes de sécurité mis en oeuvre utilisent des protocoles verbeux de type HTTPS (pour « HyperText Transfer Protocol Secure » en anglais), pour la sécurisation des échanges de données.

De plus, ces protocoles nécessitent la mise en place d'un serveur complexe côté « au sol » qui n'est pas toujours disponible chez un client final.

En outre, le codage des données est pris en charge par des formats de type XML, certes très évolutif, mais aussi très volumineux (rapport jusqu'à x20).

Enfin, les mécanismes de connexion utilisent des connexions de type sockets TCP sans surveillance de disponibilité de l'interface réseau (ou « bearer » en anglais), ce qui implique l'arrêt brutal d'une session de communication en cours et/ou du transfert d'information, dès lors qu'une déconnexion intempestive survient.

### 3. Objectifs de l'invention

L'invention a notamment pour objectif de pallier ces inconvénients de l'art antérieur.

Plus précisément, un premier objectif de l'invention est de fournir une solution technique permettant d'interconnecter simplement des machines distantes pour le support d'applications distribuées et communicantes, notamment mais non exclusivement du type M2M.

Un autre objectif de l'invention est de fournir une telle technique qui permette de concevoir rapidement des applications distribuées qui soient à la fois évolutives et complètement portable d'un système d'exploitation ou d'un réseau de communication, vers un autre, tout en s'affranchissant de l'utilisation d'une quelconque librairie de composants applicatifs ou bien de communication Propriétaire.

Un objectif supplémentaire de l'invention consiste à proposer une telle technique permettant de simplifier la mise en oeuvre et l'exploitation d'un réseau de machines, tout en s'appuyant sur des technologies standards, bien que parfois hétérogènes et/ou incompatibles.

Un autre objectif de l'invention est d'offrir une telle solution technique d'établir et de maintenir des connexions réseau entre deux ou plusieurs applications communicantes exécutées sur des terminaux de communication distants, en s'appuyant sur des interfaces d'accès réseau (ou « bearer » en anglais) qui soient aussi bien homogènes que complètement hétérogènes.

Un objectif supplémentaire de l'invention est de fournir des mécanismes de reconnexion automatique sur des interfaces réseau disponibles et des mécanismes de sauvegardes temporaires des données avec reprise sur panne.

Encore un objectif de l'invention est de fournir une telle technique qui permette une homogénéisation du format des données et du format des messages échangés entre les terminaux et/ou les applications communicantes qu'ils exécutent.

Un objectif supplémentaire de l'invention consiste à proposer une solution d'interconnexion qui soit parfaitement sécurisée, aussi bien pour ce qui concerne l'accès que pour ce qui concerne la récupération et/ou le transfert et/ou l'échange des données.

En d'autres termes, l'invention vise à proposer une solution technique à la fois simple et efficace en termes de conception, de mise en oeuvre et de maintenance, et proposant une approche globale favorisant l'interopérabilité et donc, un retour sur investissement relativement rapide.

### 4. Caractéristiques essentielles de l'invention

Ces objectifs, ainsi que d'autres qui apparaîtront par la suite, sont atteints à l'aide d'un procédé d'établissement d'une session de communication entre au moins un premier terminal client de radiocommunication comprenant des moyens d'accès à au moins un réseau de communication mobile et exécutant une application cliente, et au moins terminal distant de capture et/ou de mise à disposition de données d'information prédéterminées exécutant une application serveur, ladite application cliente et ladite application serveur formant une application distribuée.

Ledit au moins un terminal distant de capture et/ou de mise à disposition de données d'information prédéterminées étant hébergé par un réseau de communication privé accessible d'une façon centralisée au moyen d'un terminal d'accès unique de supervision des communications, le procédé selon l'invention comporte avantageusement au moins une étape de création d'un canal de communication logique temporaire pour l'échange d'au moins un message entre le terminal client et ledit au moins un terminal distant de capture et/ou de mise disposition de données d'information prédéterminées par l'intermédiaire du terminal d'accès et de supervision des communications.

Préférentiellement, l'étape de création tient compte d'au moins une politique prédéfinie de connexion du terminal client et/ou du terminal distant au terminal d'accès et de supervision de communications.

Avantageusement, ladite au moins une politique prédéfinie tient compte d'au moins un critère prédéterminé représentatif de la classe d'appartenance du contenu des messages échangés et/ou d'au moins un critère prédéterminé représentatif dudit au moins un réseau de communication accessible au terminal client à un instant donné et/ou dans une zone géographique donnée.

Préférentiellement, lorsque ladite au moins une classe d'appartenance des messages est du type classe de données urgentes, la politique de connexion est une politique de connexion par défaut impliquant l'exécution immédiate de l'étape de création du canal de communication logique temporaire pour la transmission d'au moins un message de données urgentes entre le terminal client et le terminal distant.

De façon également préférentielle, lorsque ladite au moins une classe d'appartenance des messages est du type classe de données normales, l'étape de création du canal de communication est précédée d'une étape préliminaire de vérification d'au moins un des critères représentatifs de la classe d'appartenance du contenu des messages échangés et/ou d'au moins un critère prédéterminé représentatif dudit au moins un réseau de communication accessible au terminal client.

Et, lorsque ladite au moins une classe d'appartenance des messages est du type classe de données non urgentes, l'étape de création du canal de communication est préférentiellement différée jusqu'à la détection d'au moins d'au moins un critère prédéterminé représentatif de la disponibilité d'une passerelle d'accès et/ou d'un point d'accès réseau du terminal client à un réseau de communication à faible coût d'usage, par une étape de supervision de la disponibilité des passerelles et/ou points d'accès à au moins un réseau de communication mobiles accessible à un instant donné au terminal client.

Ainsi, le lecteur comprendra que l'invention s'inscrit dans une approche complètement nouvelle et inventive d'interconnexion entre terminaux et/ou applications communicantes exécutées sur de tels terminaux de communication, puisque celle-ci, allant même à l'encontre des solutions habituellement pensées par l'Homme du métier.

En effet, habituellement, quel que soit le type de données à échanger et quel que soit le degré d'importance du contenu de ces dernières, dès lors qu'une connexion réseau peut être établie entre au moins deux terminaux de communication distants ou bien entre au moins deux applications communicantes, une session de communication est automatiquement initiée et les données et/ou messages d'information échangés au travers cette connexion réseau.

Or, les réseaux de communication mobiles n'ont pas tous les mêmes capacités en termes de bandes passantes, ni même en termes de coût d'usage. Aussi, en fonction d'un contexte applicatif donné n'est-il pas forcément nécessaire d'initier une session de communication dès lors que seul un accès à un réseau à coût d'utilisation élevé et/ou à faible niveau de bande passante est accessible à un terminal de radiocommunication à un instant donné, alors qu'il suffirait d'attendre que le terminal de radiocommunication entre dans une zone de couverture géographique d'un point d'accès à un réseau de communication mobile offrant un faible coût d'utilisation, pour que celui-ci transmette des données ne présentant aucun caractère d'urgence.

L'invention propose justement de mettre à disposition une telle technique d'interconnexion entre terminaux et/ou applications communicantes distantes, laquelle tient compte d'au moins un des critères représentatifs de la classe d'appartenance du contenu des messages échangés (par exemple des données possédant un caractère d'urgence) et/ou d'au moins un critère prédéterminé représentatif dudit au moins un réseau de communication accessible au terminal client, par exemple le coût d'utilisation de ce dernier.

Avantageusement, ladite au moins une étape de création d'un canal de communication logique temporaire est exécutée par l'un au moins des terminaux distants de capture et/ou de mise à disposition de données d'information prédéterminées exécutant une application serveur. Ce canal de communication, une fois créé, relie ledit au moins un terminal distant de capture et/ou de mise à disposition de données d'information au terminal d'accès et de supervision, et le terminal d'accès et de supervision au terminal de radiocommunication exécutant l'application communicante cliente. Le terminal d'accès et de supervision devient alors un point de passage obligé des messages échangés entre le terminal serveur distant de capture et/ou de mise à disposition d'informations, et le terminal client, ce qui favorise d'une part le contrôle des messages et de leur contenu et d'autre part, la sécurité des communications et des données.

Préférentiellement, la requête d'exécution de l'étape de création d'un canal de communication logique temporaire est transmise par l'application cliente du terminal client au terminal d'accès et/ou de supervision des communications.

De façon avantageuse, l'un au moins des critères prédéterminés représentatifs dudit au moins un réseau de communication permettant au terminal client d'accéder au terminal serveur d'accès dédié appartient au groupe comprenant au moins :
- la disponibilité d'au moins une passerelle d'accès audit réseau de communication à un instant donné ;
- la bande passante dudit réseau de communication ;
- la gigue dudit réseau de communication ;
- le coût d'usage dudit réseau de communication.

De façon préférentielle, l'étape de création d'un canal de communication logique temporaire comporte au moins les sous-étapes suivantes de détection à un instant donné et relativement à la position géographique courante du terminal client, d'au moins une passerelle ou d'au moins un point d'accès à un réseau de communication mobile permettant au terminal client de se connecter au terminal d'accès, et au moins une sous-étape de sélection parmi une liste de passerelles d'accès à un réseau de communication mobile, d'au moins une passerelle conforme audit au moins un critère prédéterminé représentatif dudit au moins un réseau de communication défini dans la politique prédéfinie de connexion.

Ainsi, si au moins une passerelle (encore appelée indifféremment point d'accès réseau) d'accès réseau est détectée à l'étape de détection et/ou qu'au moins une passerelle d'accès réseau conforme audit au moins un critère réseau prédéterminé est sélectionné dans la liste, on exécute les sous-étapes supplémentaires suivantes :
o transmission au terminal d'accès par le terminal client d'au moins une requête d'établissement d'une session de communication avec au moins un terminal serveur distant ;
o d'identification et/ou d'authentification du terminal client par le terminal d'accès.

Et, si aucune passerelle d'accès réseau n'est détectée à l'étape de détection et/ou qu'au moins une passerelle d'accès réseau conforme audit au moins un critère réseau prédéterminé ne peut être sélectionnée dans la liste, on exécute les sous-étapes supplémentaires suivantes :
o de stockage temporaire de la requête d'établissement d'une session de communication et/ou des messages de données provenant du terminal serveur distant ;
o de supervision itérative, à intervalles temps régulier, de la disponibilité d'une nouvelle passerelle d'accès du terminal client un réseau de communication mobile conforme audit au moins un critère réseau prédéterminé, de façon que lorsque une telle nouvelle passerelle est détectée, les données stockées durant l'étape de stockage temporaire sont échangées entre le terminal client et le terminal serveur distant, ou entre le terminal d'accès et le terminal client.

Avantageusement, le procédé selon l'invention met en oeuvre au moins une étape d'encryptage à la volée du contenu des messages échangés entre le terminal client et le terminal d'accès et/ou le terminal serveur distant, au travers le canal de communication, l'étape d'encryptage tenant compte d'au moins un paramètre prédéterminé définissant un niveau de sécurité préalablement requis.

De façon préférentielle, le canal de communication est un canal sécurisé de transmission de données en mode point à point entre ledit terminal client et un terminal relais connecté localement audit terminal serveur distant, le terminal relais étant apte à formater et/ou à interprétation et/ou à stocker lesdits messages échangés entre ledit terminal client et ledit terminal serveur distant.

A titre de remarque, les messages échangés sont assimilables à un signal de données pouvant être transmis entre au moins un terminal émetteur et au moins un terminal récepteur et dont la structure dudit signal comprend une pluralité d'informations ou de commandes locale ou distante structurées sous un format du type XML, par exemple.

Préférentiellement, le terminal relais comprend un identifiant matériel unique codé sur une pluralité d'octets.

De façon avantageuse, à chaque nouvelle étape de création d'un canal de communication logique temporaire, le procédé exécute une étape génération automatique d'une clé d'encryptage aléatoire associée au terminal client préalablement authentifié et/ou identifié, de façon à éviter tout risque de reconnexion d'un terminal et/ou d'une application client non autorisée, au terminal d'accès.

De façon préférentielle, le procédé selon l'invention met en oeuvre une étape supplémentaire de supervision active de l'état courant d'un canal de communication établi à l'issue de l'étape de création d'un canal de communication entre le terminal client et le terminal serveur distant, telle que lorsque qu'une rupture intempestive du canal de communication est détectée, il exécute une étape itérative de tentative de rétablissement du canal de communication entre le terminal client et le terminal serveur distant telle que si le canal de communication est reconstruit, la session de communication précédente se poursuit, ou si le canal de communication ne peut être reconstruit, on exécute l'étape de stockage temporaire des messages de données provenant du terminal serveur distant.

Dans un mode de réalisation préféré de l'invention, lesdits messages échangés entre lesdits terminaux clients et lesdits terminaux serveurs, par l'intermédiaire dudit au moins un terminal relais sont des messages possédant une structure au format XML comprenant une pluralité de champs spécifiques appartenant au groupe comprenant :
- au moins un champ d'indication du type de message : message de demande locale d'information ou message de commande locale ou à distance ;
- au moins un champ d'identification de l'application émettrice dudit message ;
- au moins un champ d'indication du chemin de routage que ledit message est autorisé à emprunter sur le réseau de communication, entre au moins une application émettrice et au moins une application destinataire dudit message ;
- au moins un champ d'information des pièces contenues et ou jointes audit message ;
- au moins un champ définissant le nom du ou des fichiers attachés audit message ;
- au moins un champ contenant un nom d'identification dudit message ;
- au moins un champ précisant si pour chaque commande envoyée contenue dans ledit message, si un message d'acquittement doit être transmis en retour à ladite application émettrice par ladite application destinataire dudit message ;
- au moins un champ contenant ladite commande à exécuter localement ou à distance par ladite application destinataire dudit message.

Il est ici important de souligner que par message transmis entre au moins un terminal (ou application) client(e) et au moins un terminal (ou application serveur), on entend un signal de données de structurées permettant l'échange d'informations ou de commandes exécutables localement ou à distance entre au moins un terminal client et au moins un terminal serveur, ou bien entre au moins une application cliente et au moins une application serveur.

Préférentiellement, ladite structure desdits messages échangés comprenant en outre l'un au moins des champs suivants appartenant au groupe comprenant :
- un nom et/ou un identifiant unique de ladite application destinataire devant exécuter ladite commande contenu dans ledit message ;
- l'identifiant d'au moins un noeud dudit réseau de communication mobile devant exécuter ladite commande contenu dans ledit message et/ou relayer ledit message vers une application cliente ;
- un indicateur d'une application cliente auprès de laquelle ladite application destinataire ayant exécuté ladite commande contenue dans ledit message doit envoyer le résultat de l'exécution de cette dernière.

Avantageusement, lesdits messages échangés sont du type appartenant au groupe comprenant :
- un message local de demande d'information auprès d'au moins un agent local communicant exécuté sur un terminal client et/ou serveur;
- un message local de demande d'exécution d'une commande locale par une application locale exécutés sur un terminal client et/ou serveur ;
- un message distant de demande d'information auprès d'au moins un agent distant communicant exécuté sur un terminal client et/ou serveur distant ;
- un message distant de demande d'exécution d'une commande distante par une application locale exécutés sur un terminal client et/ou serveur.

Selon l'invention, lorsque lesdits messages échangés sont du type requête de demande de localisation d'une application cliente ou serveur ou message de transmission d'une telle localisation, ladite structure de format comprend de façon préférentielle les champs suivants :
- une information représentative d'une date au format UTC (temps universel coordonné) ;
- une durée correspondant à une période ouverte pour transmettre ladite localisation ;
- une information représentative de la validité de ladite localisation, du type correspondant à une localisation non valide, à une localisation GPS (« global positioning System » en anglais, ou système de position global en français) ou à une localisation DGPS(« Differential GPS » en anglais ou GPS différentiel en français) ;
- une information représentative de la longitude ;
- une information représentative de la latitude ;
- une information représentative de l'altitude ;
- une information représentative du cap ;
- une information représentative du nombre de satellites aptes à fournir ladite localisation de ladite application à un instant donné ;
- une information représentative de la vitesse de déplacement de ladite application exécutée sur un terminal mobile ;
- une information représentative de la précision horizontale de ladite localisation à un instant donné.

De même, lorsque lesdits messages échangés sont du type messages de programmation et/ou d'indication de secteur de localisation géographique, ladite structure de format comprend avantageusement les champs suivants :
- une information représentative de l'identifiant unique du secteur de localisation géographique ;
- une information représentative d'une date au format UTC (temps universel coordonné) ;
- une information représentative de la longitude ;
- une information représentative de la latitude ;
- une information représentative du cap ;
- une information représentative du diamètre, par exemple en mètres, du diamètre dudit secteur de localisation géographique ;
- une information représentative du paramétrage d'une alarme à déclencher suivant que ladite application exécutée sur un terminal mobile en déplacement entre ou sorte dudit secteur de localisation géographique ;
- une information représentative de la vitesse de déplacement de ladite application exécutée sur un terminal mobile.

Il est bien entendu possible d'enrichir à souhait et de façon non limitative la structure de base précitée du format des messages, en fonction des classes d'appartenance des messages (ou signaux de données) échangés entres les applications clientes et serveurs ou entre les terminaux clients et serveurs exécutant respectivement de telles applications.

Par ailleurs, le terminal d'accès et/ou de supervision des communications exécute avantageusement et en temps réel une étape de suivi à distance du déplacement géographique du terminal client, de façon à anticiper une éventuelle rupture du canal de communication et/ou à exécuter une étape de basculement automatique de la session de communication d'un premier canal de communication utilisant un premier réseau de communication mobile, sur un deuxième canal de communication utilisant un deuxième réseau de communication mobile.

L'invention concerne également un produit programme d'ordinateur téléchargeable depuis un réseau de communication et/ou enregistré sur un support lisible par ordinateur et/ou exécutable par un processeur.

Un tel produit programme d'ordinateur comprend préférentiellement des instructions de code de programme pour l'exécution d'au moins une des étapes du procédé d'établissement d'une session de communication, telles que précitées, entre au moins un premier terminal client de radiocommunication comprenant des moyens d'accès à au moins un réseau de communication mobile et exécutant une application cliente, et au moins terminal distant de capture et/ou de mise à disposition de données d'information prédéterminées exécutant une application serveur, l'application cliente et l'application serveur formant une application distribuée, lorsque le programme est exécuté sur au moins un ordinateur.

L'invention concerne aussi un dispositif d'établissement d'une session de communication entre au moins un premier terminal client de radiocommunication comprenant des moyens d'accès à au moins un réseau de communication mobile et exécutant une application cliente, et au moins terminal distant de capture et/ou de mise à disposition de données d'information prédéterminées exécutant une application serveur, l'application cliente et l'application serveur formant une application distribuée.

Selon l'invention, ledit au moins un terminal distant de capture et/ou de mise à disposition de données d'information prédéterminées étant hébergé par un réseau de communication privé accessible d'une façon centralisée au moyen d'un terminal d'accès unique de supervision des communications, le dispositif comprend des moyens de création d'un canal de communication logique temporaire pour l'échange d'au moins un message entre le terminal client et ledit au moins un terminal distant de capture et/ou de mise disposition de données d'information prédéterminées par l'intermédiaire dudit terminal d'accès et de supervision des communications.

Les moyens de création tiennent compte, préférentiellement d'au moins une politique prédéfinie de connexion du terminal client et/ou du terminal distant au terminal d'accès et de supervision de communications.

Avantageusement, ladite au moins une politique prédéfinie tient compte d'au moins un critère prédéterminé représentatif de la classe d'appartenance du contenu des messages échangés et/ou d'au moins un critère prédéterminé représentatif du au moins un réseau de communication accessible au terminal client à un instant donné et/ou dans une zone géographique donnée.

De façon avantageuse, lorsque ladite au moins une classe d'appartenance des messages est du type classe de données urgentes, la politique de connexion est une politique de connexion par défaut impliquant l'activation immédiate des moyens de création du canal de communication logique temporaire pour la transmission d'au moins un message de données urgentes entre le terminal client et le terminal distant.

Avantageusement, lorsque ladite au moins une classe d'appartenance des messages est du type classe de données normales, les moyens de création du canal de communication sont activés après des moyens de vérification d'au moins un des critères représentatifs de la classe d'appartenance du contenu des messages échangés et/ou d'au moins un critère prédéterminé représentatif dudit au moins un réseau de communication accessible au terminal client.

De façon également avantageuse, lorsque ladite au moins une classe d'appartenance des messages est du type classe de données non urgentes, l'activation des moyens de création du canal de communication est différée jusqu'à la détection d'au moins un critère prédéterminé représentatif de la disponibilité d'une passerelle d'accès et/ou d'un point d'accès réseau du terminal client à un réseau de communication à faible coût d'usage, par des moyens de supervision de la disponibilité des passerelles d'accès à au moins un réseau de communication mobiles accessible à un instant donné au terminal client

Préférentiellement, ledit au moins un terminal distant de capture et/ou de mise à disposition de données d'information prédéterminées exécutant une application serveur comprend les moyens de création d'un canal de communication logique temporaire.

De façon également préférentielle, la requête d'activation des moyens de création d'un canal de communication logique temporaire est transmise par l'application cliente exécutée par le terminal client au terminal d'accès et/ou de supervision des communications.

De façon avantageuse, le critère prédéterminé représentatif dudit au moins un réseau de communication permettant au terminal client d'accéder au terminal serveur d'accès dédié appartient au groupe comprenant au moins :
- la disponibilité d'au moins une passerelle d'accès au réseau de communication à un instant donné ;
- la bande passante du réseau de communication ;
- la gigue du réseau de communication ;
- le coût d'usage du réseau de communication.

Préférentiellement, les moyens de création d'un canal de communication logique temporaire comprennent des moyens de détection à un instant donné et relativement à la position géographique courante du terminal client, d'au moins une passerelle d'accès et/ou d'au moins un point d'accès réseau à un réseau de communication mobile permettant au terminal client de se connecter au terminal d'accès, et des moyens de sélection parmi une liste de passerelles d'accès à un réseau de communication mobile, d'au moins une passerelle conforme audit au moins un critère prédéterminé représentatif dudit au moins un réseau de communication défini dans la politique prédéfinie de connexion.

Ainsi, si au moins une passerelle d'accès réseau est détectée par les moyens de détection et/ou qu'au moins une passerelle d'accès réseau conforme audit au moins un critère réseau prédéterminé est sélectionné dans la liste, on active les moyens supplémentaires suivants :
o de transmission au terminal d'accès par le terminal client d'au moins une requête d'établissement d'une session de communication avec au moins un terminal serveur distant ;
o d'identification et/ou d'authentification du terminal client par le terminal d'accès.

Et si aucune passerelle d'accès réseau n'est détectée par les moyens de détection et/ou qu'au moins une passerelle d'accès réseau conforme audit au moins un critère réseau prédéterminé ne peut être sélectionnée dans la liste, on active les moyens supplémentaires suivants :
o de stockage temporaire de la requête d'établissement d'une session de communication et/ou des messages de données provenant du terminal serveur distant ;
o de supervision itérative, à intervalles temps régulier, de la disponibilité d'une nouvelle passerelle d'accès du terminal client un réseau de communication mobile conforme audit au moins un critère réseau prédéterminé, de façon que lorsque une telle nouvelle passerelle est détectée, les données stockées durant l'étape de stockage temporaire sont échangées entre le terminal client et le terminal serveur distant, ou entre le terminal d'accès et le terminal client.

Préférentiellement, le dispositif selon l'invention comprend des moyens d'encryptage à la volée du contenu des messages échangés entre le terminal client et le terminal d'accès et/ou le terminal serveur distant, au travers le canal de communication, les moyens d'encryptage tenant compte d'au moins un paramètre prédéterminé définissant un niveau de sécurité préalablement requis.

De façon également avantageuse, le canal de communication est un canal sécurisé de transmission de données en mode point à point entre le terminal client et un terminal relais connecté localement au terminal serveur distant, le terminal relais étant apte à formater et/ou à interprétation et/ou à stocker les messages échangés entre le terminal client et le terminal serveur distant.

Préférentiellement, le terminal relais comprend un identifiant matériel unique codé sur une pluralité d'octets.

De façon préférentielle, le terminal d'accès et/ou de supervision des communications comprend des moyens d'exécution en temps réel d'un suivi à distance du déplacement géographique du terminal client, de façon à anticiper une éventuelle rupture du canal de communication et/ou à activer des moyens de basculement automatique de la session de communication d'un premier canal de communication utilisant un premier réseau de communication mobile, sur un deuxième canal de communication utilisant un deuxième réseau de communication mobile.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une vue macroscopique de l'architecture réseau mise en oeuvre au moyen du procédé selon l'invention ;
- la figure 2 illustre d'une façon plus détaillée les différents éléments techniques constituant une architecture supportant le procédé selon l'invention ;
- la figure 3 présente une vue globale et synthétique d'une architecture réseau centralisée et supervisée autour d'un terminal d'accès et de supervision des communications entre différents terminaux clients ;
- la figure 4 illustre le principe d'établissement d'une connexion réseau entre un terminal client et un terminal serveur distant de mise à disposition et/ou de capture d'information, selon l'invention ;
- la figure 5 présente le principe général de l'échange de données et/ou de messages d'information entre un terminal de radiocommunication et au moins un terminal serveur de mise à disposition et/ou de capture d'information, par l'intermédiaire d'un terminal serveur d'accès et/ou de supervision des communications.

### 5. Description détaillée d'un mode de réalisation de l'invention

La présente invention concerne donc un procédé et dispositif globalisés de connexion optimisée et sécurisé de terminaux mobiles de différents types à des réseaux de communications de types et de caractéristiques techniques différentes.

Cette invention définit plus précisément un procédé d'interconnexion de d'applications communicantes formant application(s) distribuée(s) constituant une application spécifique, par exemple pour le marché M2M, tels que :
- télécollecte : relevé de l'état de machines, lecture de compteurs ;
- télé contrôle : prise de contrôle et gestion d'une machine ;
- télémétrie : lecture de capteurs, acquisitions de mesures physiques en temps réel ;
- télématique : systèmes de Transports Intelligents, navigation, services à la mobilité, sécurité routière, diagnostic à distance ;
- télépaiement : terminaux de paiement, distributeurs de tickets ;
- télémédecine : gestion de patients, suivi d'états d'équipements ;
- télésurveillance : contrôle d'accès, gestion d'alarmes, services d'urgence ;
- télé information : infrastructures de transport public, services d'information au public, points d'accès Internet ;
- travail collaboratif assisté par ordinateur.
De telles catégories d'applications nécessitent dans leur conception et pour leur mise en oeuvre la prise en compte des contraintes particulières suivantes :
- la mobilité: les systèmes distants sont souvent géographiquement mobiles, nécessitant la mise en place de réseau de communication sans-fil, de mécanismes de sécurisation des liens pour éviter les pertes de données et des procédures de connexion spécifiques, le système mobile n'étant pas toujours joignable, suivant qu'il se situe à l'intérieur d'une zone de couverture géographique d'un point d'accès à un réseau de communication mobile, ou pas ;
- le coût d'exploitation du réseau de communication et du transfert de données lorsque ces dernières sont en volume important et nécessitant l'optimisation des mécanismes de transport des données.

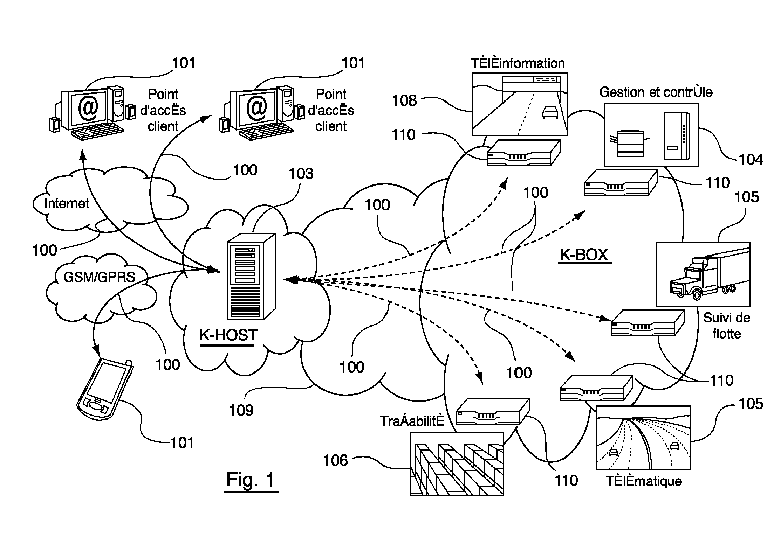

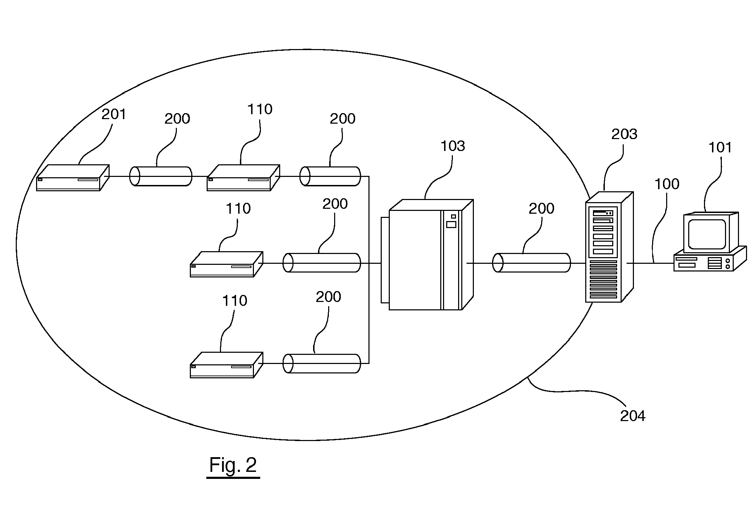

Comme illustré sur les figures 1 et 2, les communications (100) M2M permettant d'échanger tout type de données entre un terminal (101) client et un terminal (110, 201) serveur de mise à disposition et/ou de capture d'information, sont supervisées et/ou contrôlées par le terminal (103) central d'accès et de supervision des communications établies avec des « produits » de tous les jours, tels que des machines (105) de vente, des véhicules (105), des machines de bureau, des capteurs (106, 107, 108) industriels et environnementaux.

Les données échangées peuvent être issues d'une acquisition, de la lecture d'un statut (température, niveau...) ou encore permettre de contrôler un système déporté (domotique...).

Les connexions (100) physiques et/ou logiques sont à la fois parfaitement sécurisées, le seul point d'entrée du réseau (109) privé contrôlé et supervisé par le terminal (103) d'accès et de supervision mettant en oeuvre des mécanismes de sécurisation à base d'encryptage temps réel à la volée des messages échangés.

Le formatage des données et des messages échangé (ou signaux de données structuré), dans un soucis d'homogénéisation, d'interopérabilité et de portabilité des applications distribuées développées, est assuré par un terminal (110) relais disposant d'une très forte capacité de mémoire pour pouvoir stocker sur une période de temps relativement longues des messages et/ou des requêtes et/ou des données d'information requises par le terminal client de radiocommunication, jusqu'à ce que le terminal client puisse accéder à un point d'accès réseau et/ou à un réseau de communication mobile en conformité avec la politique de connexion préalablement définie.

Ce terminal (110) relais dispose également d'un ensemble important d'interfaces de connexion à différents réseaux de communication, est hébergé le plus souvent du côté du fournisseur de services, par exemple de services M2M, de telle sorte que ce dernier n'a en aucun cas besoin de ce soucier des moyens de connexion au réseau (109) privé hébergeant ses services.

Plus précisément, un tel terminal (110) relais selon l'invention se présente sous la forme d'un boîtier d'interconnexion M2M et de mise en oeuvre d'un protocole de transport des données M2M.

Un tel boîtier est complètement configurable et paramétrable. Il est bâti sur une plateforme technologique intégrée sous linux et met en oeuvre simultanément les différentes interfaces de connexion réseau du marché, tels que au moins :
- une interface CANBus ;
- une interface GPIO ;
- une interface Ethernet ;
- une interface de liaisons séries ;
- une interface USB.
Il met en oeuvre également, au moins les fonctions suivantes :
- une fonction GSM/GPRS (pour « Global system for mobile communication / Global Packet Radio Service » en anglais;
- une fonction GPS (pour « Global Positionning System » en anglais).

Un tel boîtier ou terminal relais, se décline en au moins trois versions suivant le type d'applications M2M visées.

Il sera disponible en 3 versions : une version plus spécifique pour les applications de télémétrie, une autre plus spécifique pour les applications dites nomades, et une dernière version plus spécifique pour les application embarquées, notamment mais non exclusivement sur des véhicules.

Dans sa version « télémétrie, le boîtier de connexion intègre les services de base M2M et un protocole de raccordement à distance optimisé et sécurisé.
Il est équipé également de la plupart des dispositifs de raccordement industriel, tels que RS232, RS485, GPIO, I2C, etc., et dispose aussi d'une prise Ethernet et d'un port USB.
De par l'automate configurable qu'il intègre et met en oeuvre, il est donc parfaitement adaptable à toutes les situations d'environnement et à tous les besoins d'exploitation dont l'exploitant d'un parc de machines et/ou de capteurs d'information pourrait avoir besoin.

Ce boîtier, est donc plus spécifiquement conçu, dans sa version télémétrie, pour les applications de collecte de données situées dans des endroits fixes, par exemple dans le cadre du contrôle de systèmes industriels, de télé maintenance, de récupération d'informations concernant le trafic routier, des données de péage, de commande d'équipements routiers, de distributeurs automatiques commerciaux, d'automate bancaire, de photocopieurs, de caméras ou dispositifs de télé surveillance, de monitoring de malade à domicile, etc.

Dans sa version nomade, ce boîtier (110) ou terminal relais embarque, en plus des éléments et fonctions de la version télémétrie, une fonction de localisation GPS et un ensemble de fonctions liées à cette capacité, notamment, à titre de simple exemple illustratif : le géo-positionnement, la gestion d'itinéraire, etc.

Ce terminal (110) relais, dans sa version nomade embarque également une fonction de collecte par réseau sans fil : bluetooth et/ou WLAN.

Il est donc particulièrement bien adapté à la collecte mobile de données localisées, notamment pour des application M2M du type collecte mobile de compteurs domestiques ou publics, captage et collecte de données localisées, d'informations localisées, d'information concernant des passagers dans les transports, de traçabilité de containers embarqués sur des trains, avions ou navires, etc.

Enfin, dans sa version plus spécifique aux applications embarquées, le boîtier ou terminal (110) relais supporte, outre l'ensemble des composants techniques et des fonctions des versions télémétrie et nomade, une interface busCAN qui équipe la majorité des véhicules pour le transfert de données.

Il embarque aussi une fonction GPS. Il peut ainsi faire plus que les traitements télématiques et raccorder d'autres éléments (connexion PDA, ...).

Il peut donc être avantageusement et simplement être embarqué à bord de véhicules de transport en commun, pour la gestion de l'affichage à destination des voyageurs, par exemple.

Il est en outre parfaitement adapté à la collecte de données d'information directement à bord d'un véhicule en déplacement, notamment pour la gestion à distance de flottes de véhicules (traçabilité, planning), pour des applications de navigation, de monitoring des organes techniques d'un véhicule, par exemple dans un contexte de télé expertise ou de télé assistance.

Comme illustré sur la figure 2, le procédé et dispositif d'interconnexion selon l'invention permettent de connecter des applications communicantes géographiquement distantes, certaines étant directement hébergées par des terminaux (110) relais, d'autres étant hébergées par des terminaux (201) serveur de mise à disposition et/ou de capture d'informations, avec une application cliente communicante exécutée par un terminal (101) client, dont la gestion est au moins en partie géré par un système d'information privé accessible au travers une passerelle (203) d'accès à un réseau (204) privé hébergeant une pluralité de services, par exemple M2M.

L'accès au réseau (204) privé s'effectue par l'intermédiaire de l'établissement d'une connexion (100, 200) réseau entre le terminal (101) client et un terminal de contrôle d'accès et de supervision des données et des messages échangés entre au moins certains des terminaux (110, 201) relais et/ou de mise à disposition ou de capture d'informations. Cette connexion s'effectue au moyen d'une interface de connexion du terminal client à un réseau de communication mobile, et tient comptes des différents critères prédéfinis définissant la politique de connexion du terminal client.

Comme illustré sur la figure 2, la liaison réseau entre la passerelle (203) d'accès au réseau (204) privé hébergeant les services M2M, et le terminal (103) de contrôle des accès et de supervision des échanges, ainsi que les liaisons réseau entre le terminal (103) et chacun des terminaux (110) relais, et entre les terminaux (110) relais et les terminaux (201) de mise à disposition et/ou de capture d'information, sont établies sur la base d'un protocole (200) sécurisé et dédié aux services hébergés sur le réseau (204).

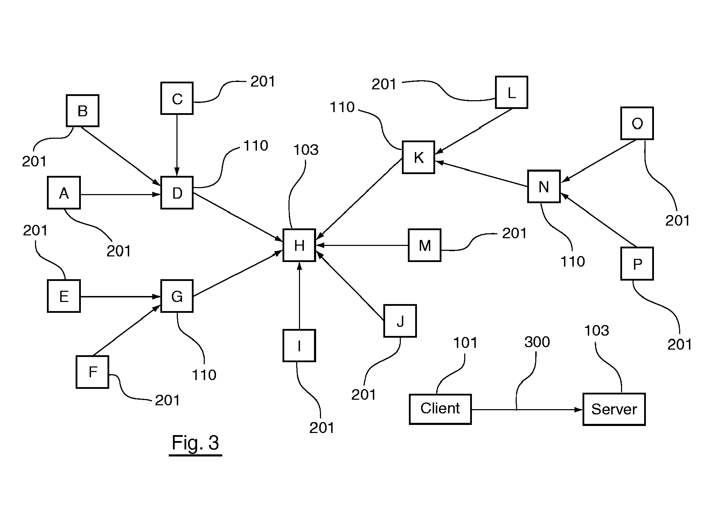

Relativement aux figures 2, 3 et 4, on décrit ici les fonctions de chacun des noeuds de l'architecture supervisée et centralisée supportant le procédé d'établissement d'une connexion selon l'invention.

Le terminal (103) de gestion des accès et de supervision des messages échangés est unique. C'est lui qui assure la sécurité de l'ensemble de l'architecture réseau ainsi mise en oeuvre et des échanges et accès qui s'effectuent au travers cette dernière.

Les terminaux (110) sont eux qui initie la connexion avec un terminal (101) client distant et extérieur à l'architecture réseau (204), suite à une requête (300) de connexion initialement transmise par le terminal (101) client au terminal (103) d'accès.

Les terminaux (110) relais ont pour fonction principale de formater les données échangées, d'une façon la plus homogène possible, et de relayer les messages entre les terminaux (201) distant de mise à disposition et/ou de capture d'informations, vers le terminal (103) qui les redirigera, éventuellement après les avoir encryptés, vers le terminal (101) client les ayant sollicitées.

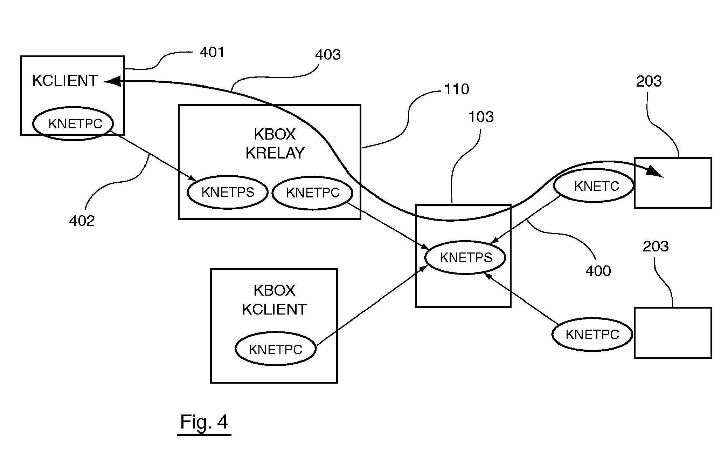

Comme illustré sur la figure 4, c'est la passerelle (203) d'accès au services du réseau (204), qui pour des raisons de sécurité relaie la requête (400) du terminal (101) client au terminal (103) d'accès et de supervision des échanges de messages.

Sur réception de cette requête (400) contenant l'identifiant unique du terminal (401) distant, le terminal (203) se met en attente d'une demande (402) d'initiation d'une connexion (403) réseau en mode point à point entre le terminal (401) distant et la passerelle (203) d'accès, laquelle relayera les informations reçues du terminal (401) par l'intermédiaire du terminal (103) de supervision des échanges.

Pour des raisons de sécurité, la demande (402) d'initiation d'une connexion (403) en mode point à point est toujours effectué par un terminal (401) distant ou par un terminal (110) relais, lorsque celui-ci est une feuille de l'arborescence réseau (204).

Un seul lien de communication en mode point à point est établi à la fois. Chaque connexion est donc temporaire, ce qui permet de ne pas maintenir en permanence une connexion réseau entre un terminal (101) client et un terminal (401) distant, mais de la maintenir uniquement sur la durée nécessaire d'une session de communication et/ou d'échange de messages et/ou de données d'information.

Dans des contexte d'urgence, en fonction de la classe de données à échanger, une connexion peut être forcée volontairement entre un terminal (101) client et un terminal (110) relais ou un terminal (401) de mise à disposition et/ou de capture d'information, ce qui peut s'avérer particulièrement utile dans le cadre de certaines applications M2M de télé expertise, ou bien de télésurveillance de patients ou de bâtiments, dès lors qu'une information d'alerte ou de caractère anormal est détecté et analysée par un terminal (401) de capture d'information, de façon à prévenir l'utilisateur du terminal (101) client.

Par ailleurs, on soulignera que le protocole de communication mis en oeuvre dans le cadre de l'invention est orienté messages et s'appuie sur le protocole de communication standard TCP/IP pour ce qui concerne les applications locales hébergées au travers le réseau (204) privé.

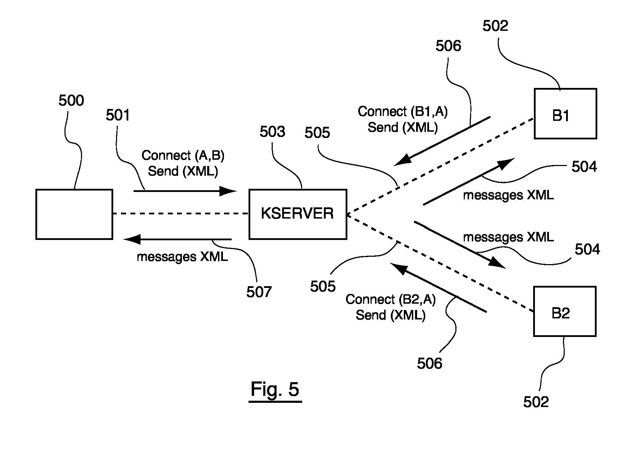

Comme illustré sur la figure 5, le procédé et le dispositif selon l'invention permettent aisément d'établir des communications du type « multicast », par exemple dans le cadre de la gestion de flottes de véhicules terrestres, aériens ou maritimes.

En effet, une application cliente (500) peut solliciter une remontée d'informations, en une seule requête (501) auprès d'un groupe d'applications serveurs (502) exécutées sur des terminaux relais (110) ou sur des terminaux de capture et/ou de mise à disposition d'informations.

Ainsi, la requête (501) est transmise par le terminal (500) client au terminal (503) d'accès et de supervision des messages, ce dernier se chargeant de redistribuer (504) la requête vers le groupe d'applications (502) clientes susceptibles de faire remonter l'information sollicitée par le terminal (500) client (par exemple des données de « log » de toute une flotte de véhicules, suite à la création d'une canal (505) de communication logique entre chacune des applications (502) et le terminal (503) d'accès et de supervision des messages.

Une fois la demande (504) d'information traitée par chacune des applications (502) serveur, ces dernières transmettent un message (506) contenant les informations demandées au terminal (503) d'accès et de supervision qui contrôle ces derniers, avant de les rediriger (507) vers le terminal (500), après un éventuel formatage de leur contenu.

Une telle approche multicast autorisée par l'invention est particulièrement intéressante dans un contexte de gestion d'abonnement à la récupération automatisée de données d'informations.

## Revendications

1. Procédé d'établissement d'une session de communication entre au moins un premier terminal client de radiocommunication comprenant des moyens d'accès à au moins un réseau de communication mobile et exécutant une application cliente, et au moins terminal distant de capture et/ou de mise à disposition de données d'information prédéterminées exécutant une application serveur, ladite application cliente et ladite application serveur formant une application distribuée,
**caractérisé en ce que** ledit au moins un terminal distant de capture et/ou de mise à disposition de données d'information prédéterminées étant hébergé par un réseau de communication privé accessible d'une façon centralisée au moyen d'un terminal d'accès unique de supervision des communications,
ledit procédé comporte au moins une étape de création d'un canal de communication logique temporaire pour l'échange d'au moins un message entre ledit terminal client et ledit au moins un terminal distant de capture et/ou de mise disposition de données d'information prédéterminées par l'intermédiaire dudit terminal d'accès et de supervision des communications,
ladite étape de création tenant compte d'au moins une politique prédéfinie de connexion dudit terminal client et/ou dudit terminal distant audit terminal d'accès et de supervision de communications.

2. Procédé d'établissement d'une session de communication selon la revendication 1, **caractérisé en ce que** ladite au moins une politique prédéfinie tient compte d'au moins un critère prédéterminé représentatif de la classe d'appartenance du contenu desdits messages échangés et/ou d'au moins un critère prédéterminé représentatif dudit au moins un réseau de communication accessible audit terminal client à un instant donné et/ou dans une zone géographique donnée.

3. Procédé d'établissement d'une session de communication entre un terminal client et au moins un terminal distant selon la revendication 3, **caractérisé en ce que** :
- lorsque ladite au moins une classe d'appartenance desdits messages est du type classe de données urgentes, ladite politique de connexion est une politique de connexion par défaut impliquant l'exécution immédiate de ladite étape de création dudit canal de communication logique temporaire pour la transmission d'au moins un message de données urgentes entre ledit terminal client et ledit terminal distant ;
- lorsque ladite au moins une classe d'appartenance desdits messages est du type classe de données normales, ladite étape de création dudit canal de communication est précédée d'une étape préliminaire de vérification d'au moins un desdits critères représentatifs de la classe d'appartenance du contenu desdits messages échangés et/ou d'au moins un critère prédéterminé représentatif dudit au moins un réseau de communication accessible audit terminal client ;
- lorsque ladite au moins une classe d'appartenance desdits messages est du type classe de données non urgentes, ladite étape de création dudit canal de communication est différée jusqu'à la détection d'au moins d'au moins un critère prédéterminé représentatif de la disponibilité d'une passerelle d'accès dudit terminal client à un réseau de communication à faible coût d'usage, par une étape de supervision de la disponibilité des passerelles d'accès à au moins un réseau de communication mobiles accessible à un instant donné audit terminal client.

4. Procédé d'établissement d'une session de communication selon la revendication 3, **caractérisé en ce que** ladite au moins une étape de création d'un canal de communication logique temporaire est exécutée par ledit au moins un terminal distant de capture et/ou de mise à disposition de données d'information prédéterminées exécutant une application serveur.

5. Procédé d'établissement d'une session de communication selon l'une quelconque des revendications 1 à 4, **caractérisé en ce que** la requête d'exécution de ladite étape de création d'un canal de communication logique temporaire est transmise par ladite application cliente dudit terminal client audit terminal d'accès et/ou de supervision des communications.

6. Procédé d'établissement d'une session de communication entre un terminal client et au moins un terminal distant selon l'une quelconque des revendications 2 à 6, **caractérisé en ce que** ledit critère prédéterminé représentatif dudit au moins un réseau de communication permettant audit terminal client d'accéder audit terminal serveur d'accès dédié appartient au groupe comprenant au moins :
- la disponibilité d'au moins une passerelle d'accès audit réseau de communication à un instant donné ;
- la bande passante dudit réseau de communication ;
- la gigue dudit réseau de communication ;
- le coût d'usage dudit réseau de communication.

7. Procédé d'établissement d'une session de communication entre un terminal client et au moins un terminal distant selon l'une quelconque des revendications 1 à 6, **caractérisé en ce que** ladite étape d'établissement d'un canal de communication logique temporaire comporte au moins les sous-étapes suivantes de détection à un instant donné et relativement à la position géographique courante dudit terminal client, d'au moins une passerelle d'accès à un réseau de communication mobile permettant audit terminal client de se connecter audit terminal d'accès,
et de sélection parmi une liste de passerelles d'accès à un réseau de communication mobile, d'au moins une passerelle conforme audit au moins un critère prédéterminé représentatif dudit au moins un réseau de communication défini dans ladite politique prédéfinie de connexion,
de façon que :
- si au moins une passerelle d'accès réseau est détectée à ladite étape de détection et/ou qu'au moins une passerelle d'accès réseau conforme audit au moins un critère réseau prédéterminé est sélectionné dans ladite liste, on exécute les sous-étapes supplémentaires suivantes :
o transmission audit terminal d'accès par ledit terminal client d'au moins une requête d'établissement d'une session de communication avec au moins un terminal serveur distant ;
o d'identification et/ou d'authentification dudit terminal client par ledit terminal ;
- si aucune passerelle d'accès réseau n'est détectée à ladite étape de détection et/ou qu'au moins une passerelle d'accès réseau conforme audit au moins un critère réseau prédéterminé ne peut être sélectionnée dans ladite liste, on exécute les sous-étapes supplémentaires suivantes :
o de stockage temporaire de ladite requête d'établissement d'une session de communication et/ou desdits messages de données provenant dudit terminal serveur distant ;
o de supervision itérative, à intervalles temps régulier, de la disponibilité d'une nouvelle passerelle d'accès dudit terminal client un réseau de communication mobile conforme audit au moins un critère réseau prédéterminé, de façon que lorsque une telle nouvelle passerelle est détectée, les données stockées durant l'étape de stockage temporaire sont échangées entre ledit terminal client et ledit terminal serveur distant, ou entre ledit terminal d'accès et ledit terminal client.

8. Procédé d'établissement d'une session de communication selon l'une quelconque des revendications 1 à 7, **caractérisé en ce qu'**il met en oeuvre au moins une étape d'encryptage à la volée dudit contenu desdits messages échangés entre ledit terminal client et ledit terminal d'accès et/ou ledit terminal serveur distant, au travers ledit canal de communication, ladite étape d'encryptage tenant compte d'au moins un paramètre prédéterminé définissant un niveau de sécurité préalablement requis.

9. Procédé d'établissement d'une session de communication selon l'une quelconque des revendications 1 à 8, **caractérisé en ce que** ledit canal de communication est un canal sécurisé de transmission de données en mode point à point entre ledit terminal client et un terminal relais connecté localement audit terminal serveur distant, apte à formater et/ou à interprétation et/ou à stocker lesdits messages échangés entre ledit terminal client et ledit terminal serveur distant.

10. Procédé d'établissement d'une session de communication selon la revendication 9, **caractérisé en ce** ledit terminal relais comprend un identifiant matériel unique codé sur une pluralité d'octets.

11. Procédé d'établissement d'une session de communication selon l'une quelconque des revendications 1 à 10, **caractérisé en ce qu'**à chaque nouvelle étape de création d'un canal de communication logique temporaire, ledit procédé exécute une étape génération automatique d'une clé d'encryptage aléatoire associée audit terminal client préalablement authentifié et/ou identifié, de façon à éviter tout risque de reconnexion d'un terminal et/ou d'une application client non autorisée, audit terminal d'accès.

12. Procédé d'établissement d'une session de communication selon l'une quelconque des revendications 7 à 11, **caractérisé en ce qu'**il met en oeuvre une étape supplémentaire de supervision active de l'état courant d'un canal de communication établi à l'issue de ladite étape de création d'un canal de communication entre ledit terminal client et ledit terminal serveur distant, telle que lorsque qu'une rupture intempestive dudit canal de communication est détectée, elle exécute une étape itérative de tentative de rétablissement dudit canal de communication entre ledit terminal client et ledit terminal serveur distant telle que si ledit canal de communication est reconstruit, ladite session de communication précédente se poursuit, ou si ledit canal de communication ne peut être reconstruit, on exécute ladite étape de stockage temporaire desdits messages de données provenant dudit terminal serveur distant.

13. Procédé d'établissement d'une session de communication selon l'une quelconque des revendications 1 à 12, **caractérisé en ce que** ledit terminal d'accès et/ou de supervision des communications exécute en temps réel une étape de suivi à distance du déplacement géographique dudit terminal client, de façon à anticiper une éventuelle rupture dudit canal de communication et/ou à exécuter une étape de basculement automatique de ladite session de communication d'un premier canal de communication utilisant un premier réseau de communication mobile, sur un deuxième canal de communication utilisant un deuxième réseau de communication mobile.

14. Procédé d'établissement d'une session de communication selon l'une quelconque des revendications 1 à 13, **caractérisé en ce que** lesdits messages échangés entre lesdits terminaux clients et lesdits terminaux serveurs, par l'intermédiaire dudit au moins un terminal relais sont des messages possédant une structure au format XML comprenant une pluralité de champs spécifiques appartenant au groupe comprenant :
- au moins un champ d'indication du type de message : message de demande locale d'information ou message de commande locale ou à distance ;
- au moins un champ d'identification de l'application émettrice dudit message ;
- au moins un champ d'indication du chemin de routage que ledit message est autorisé à emprunter sur le réseau de communication, entre au moins une application émettrice et au moins une application destinataire dudit message ;
- au moins un champ d'information des pièces contenues et ou jointes audit message ;
- au moins un champ définissant le nom du ou des fichiers attachés audit message ;
- au moins un champ contenant un nom d'identification dudit message ;
- au moins un champ précisant si pour chaque commande envoyée contenue dans ledit message, si un message d'acquittement doit être transmis en retour à ladite application émettrice par ladite application destinataire dudit message ;
- au moins un champ contenant ladite commande à exécuter localement ou à distance par ladite application destinataire dudit message.

15. Procédé d'établissement d'une session de communication selon la revendication 14, **caractérisé en ce que** ladite structure desdits messages échangés comprenant en outre l'un au moins des champs suivants appartenant au groupe comprenant :
- un nom et/ou un identifiant unique de ladite application destinataire devant exécuter ladite commande contenu dans ledit message ;
- l'identifiant d'au moins un noeud dudit réseau de communication mobile devant exécuter ladite commande contenu dans ledit message et/ou relayer ledit message vers une application cliente ;
- un indicateur d'une application cliente auprès de laquelle ladite application destinataire ayant exécuté ladite commande contenue dans ledit message doit envoyer le résultat de l'exécution de cette dernière.

16. Procédé d'établissement d'une session de communication selon l'une quelconque des revendications 14 et 15, **caractérisé en ce que** lesdits messages échangés sont du type appartenant au groupe comprenant :
- un message local de demande d'information auprès d'au moins un agent local communicant exécuté sur un terminal client et/ou serveur;
- un message local de demande d'exécution d'une commande locale par une application locale exécutés sur un terminal client et/ou serveur ;
- un message distant de demande d'information auprès d'au moins un agent distant communicant exécuté sur un terminal client et/ou serveur distant ;
- un message distant de demande d'exécution d'une commande distante par une application locale exécutés sur un terminal client et/ou serveur.

17. Procédé d'établissement d'une session de communication selon l'une quelconque des revendications 14 à 16, **caractérisé en ce que** lorsque lesdits messages échangés sont du type requête de demande de localisation d'une application cliente ou serveur ou message de transmission d'une telle localisation, ladite structure de format comprend les champs suivants :
- une information représentative d'une date au format UTC (temps universel coordonné) ;
- une durée correspondant à une période ouverte pour transmettre ladite localisation ;
- une information représentative de la validité de ladite localisation, du type correspondant à une localisation non valide, à une localisation du type GPS ou à une localisation du type DGPS ;
- une information représentative de la longitude ;
- une information représentative de la latitude ;
- une information représentative de l'altitude ;
- une information représentative du cap ;
- une information représentative du nombre de satellites aptes à fournir ladite localisation de ladite application à un instant donné ;
- une information représentative de la vitesse de déplacement de ladite application exécutée sur un terminal mobile ;
- une information représentative de la précision horizontale de ladite localisation à un instant donné.

18. Procédé d'établissement d'une session de communication selon l'une quelconque des revendications 14 à 17, **caractérisé en ce que** lorsque lesdits messages échangés sont du type messages de programmation et/ou d'indication de secteur de localisation géographique, ladite structure de format comprend les champs suivants :
- une information représentative de l'identifiant unique du secteur de localisation géographique ;
- une information représentative d'une date au format UTC (temps universel coordonné) ;
- une information représentative de la longitude ;
- une information représentative de la latitude ;
- une information représentative du cap ;
- une information représentative du diamètre, par exemple en mètres, du diamètre dudit secteur de localisation géographique ;
- une information représentative du paramétrage d'une alarme à déclencher suivant que ladite application exécutée sur un terminal mobile en déplacement entre ou sorte dudit secteur de localisation géographique ;
- une information représentative de la vitesse de déplacement de ladite application exécutée sur un terminal mobile.

19. Dispositif d'établissement d'une session de communication entre au moins un premier terminal client de radiocommunication comprenant des moyens d'accès à au moins un réseau de communication mobile et exécutant une application cliente, et au moins terminal distant de capture et/ou de mise à disposition de données d'information prédéterminées exécutant une application serveur, ladite application cliente et ladite application serveur formant une application distribuée,
**caractérisé en ce que** ledit au moins un terminal distant de capture et/ou de mise à disposition de données d'information prédéterminées étant hébergé par un réseau de communication privé accessible d'une façon centralisée au moyen d'un terminal d'accès unique de supervision des communications,
ledit dispositif comprend des moyens de création d'un canal de communication logique temporaire pour l'échange d'au moins un message entre ledit terminal client et ledit au moins un terminal distant de capture et/ou de mise disposition de données d'information prédéterminées par l'intermédiaire dudit terminal d'accès et de supervision des communications,
lesdits moyens de création tenant compte d'au moins une politique prédéfinie de connexion dudit terminal client et/ou dudit terminal distant audit terminal d'accès et de supervision de communications.

20. Dispositif d'établissement d'une session de communication selon la revendication 19, **caractérisé en ce que** ladite au moins une politique prédéfinie tient compte d'au moins un critère prédéterminé représentatif de la classe d'appartenance du contenu desdits messages échangés et/ou d'au moins un critère prédéterminé représentatif dudit au moins un réseau de communication accessible audit terminal client à un instant donné et/ou dans une zone géographique donnée.

21. Dispositif d'établissement d'une session de communication entre un terminal client et au moins un terminal distant selon la revendication 20,
**caractérisé en ce que** :
- lorsque ladite au moins une classe d'appartenance desdits messages est du type classe de données urgentes, ladite politique de connexion est une politique de connexion par défaut impliquant l'activation immédiate desdits moyens de création dudit canal de communication logique temporaire pour la transmission d'au moins un message de données urgentes entre ledit terminal client et ledit terminal distant ;
- lorsque ladite au moins une classe d'appartenance desdits messages est du type classe de données normales, lesdits moyens de création dudit canal de communication sont activés après des moyens de vérification d'au moins un desdits critères représentatifs de la classe d'appartenance du contenu desdits messages échangés et/ou d'au moins un critère prédéterminé représentatif dudit au moins un réseau de communication accessible audit terminal client ;
- lorsque ladite au moins une classe d'appartenance desdits messages est du type classe de données non urgentes, l'activation desdits moyens de création dudit canal de communication est différée jusqu'à la détection d'au moins un critère prédéterminé représentatif de la disponibilité d'une passerelle d'accès dudit terminal client à un réseau de communication à faible coût d'usage, par des moyens de supervision de la disponibilité des passerelles d'accès à au moins un réseau de communication mobiles accessible à un instant donné audit terminal client.

22. Dispositif d'établissement d'une session de communication selon la revendication 21, **caractérisé en ce que** ledit au moins un terminal distant de capture et/ou de mise à disposition de données d'information prédéterminées exécutant une application serveur comprend lesdits moyens de création d'un canal de communication logique temporaire.

23. Dispositif d'établissement d'une session de communication selon l'une quelconque des revendications 19 à 22, **caractérisé en ce que** la requête d'activation desdits moyens de création d'un canal de communication logique temporaire est transmise par ladite application cliente dudit terminal client audit terminal d'accès et/ou de supervision des communications.

24. Procédé d'établissement d'une session de communication entre un terminal client et au moins un terminal distant selon l'une quelconque des revendications 21 à 23, **caractérisé en ce que** ledit critère prédéterminé représentatif dudit au moins un réseau de communication permettant audit terminal client d'accéder audit terminal serveur d'accès dédié appartient au groupe comprenant au moins :
- la disponibilité d'au moins une passerelle d'accès audit réseau de communication à un instant donné ;
- la bande passante dudit réseau de communication ;
- la gigue dudit réseau de communication ;
- le coût d'usage dudit réseau de communication.

25. Dispositif d'établissement d'une session de communication entre un terminal client et au moins un terminal distant selon l'une quelconque des revendications 19 à 24, **caractérisé en ce que** lesdits moyens de création d'un canal de communication logique temporaire comprennent des moyens de détection à un instant donné et relativement à la position géographique courante dudit terminal client, d'au moins une passerelle d'accès à un réseau de communication mobile permettant audit terminal client de se connecter audit terminal d'accès,
et des moyens de sélection parmi une liste de passerelles d'accès à un réseau de communication mobile, d'au moins une passerelle conforme audit au moins un critère prédéterminé représentatif dudit au moins un réseau de communication défini dans ladite politique prédéfinie de connexion,
de façon que :
- si au moins une passerelle d'accès réseau est détectée par lesdits moyens de détection et/ou qu'au moins une passerelle d'accès réseau conforme audit au moins un critère réseau prédéterminé est sélectionné dans ladite liste, on active les moyens supplémentaires suivants :
o de transmission audit terminal d'accès par ledit terminal client d'au moins une requête d'établissement d'une session de communication avec au moins un terminal serveur distant ;
o d'identification et/ou d'authentification dudit terminal client par ledit terminal d'accès ;
- si aucune passerelle d'accès réseau n'est détectée par lesdits moyens de détection et/ou qu'au moins une passerelle d'accès réseau conforme audit au moins un critère réseau prédéterminé ne peut être sélectionnée dans ladite liste, on active les moyens supplémentaires suivants :
o de stockage temporaire de ladite requête d'établissement d'une session de communication et/ou desdits messages de données provenant dudit terminal serveur distant ;
o de supervision itérative, à intervalles temps régulier, de la disponibilité d'une nouvelle passerelle d'accès dudit terminal client un réseau de communication mobile conforme audit au moins un critère réseau prédéterminé, de façon que lorsque une telle nouvelle passerelle est détectée, les données stockées durant l'étape de stockage temporaire sont échangées entre ledit terminal client et ledit terminal serveur distant, ou entre ledit terminal d'accès et ledit terminal client.

26. Dispositif d'établissement d'une session de communication selon l'une quelconque des revendications 19 à 25, **caractérisé en ce qu'**il met comprend des moyens d'encryptage à la volée dudit contenu desdits messages échangés entre ledit terminal client et ledit terminal d'accès et/ou ledit terminal serveur distant, au travers ledit canal de communication, lesdits moyens d'encryptage tenant compte d'au moins un paramètre prédéterminé définissant un niveau de sécurité préalablement requis.

27. Dispositif d'établissement d'une session de communication selon l'une quelconque des revendications 19 à 26, **caractérisé en ce que** ledit canal de communication est un canal sécurisé de transmission de données en mode point à point entre ledit terminal client et un terminal relais connecté localement audit terminal serveur distant, apte à formater et/ou à interprétation et/ou à stocker lesdits messages échangés entre ledit terminal client et ledit terminal serveur distant.

28. Dispositif d'établissement d'une session de communication selon la revendication 27, **caractérisé en ce** ledit terminal relais comprend un identifiant matériel unique codé sur une pluralité d'octets.

29. Dispositif d'établissement d'une session de communication selon l'une quelconque des revendications 19 à 28, **caractérisé en ce que** ledit terminal d'accès et/ou de supervision des communications comprend des moyens d'exécution en temps réel d'un suivi à distance du déplacement géographique dudit terminal client, de façon à anticiper une éventuelle rupture dudit canal de communication et/ou à activer des moyens de basculement automatique de ladite session de communication d'un premier canal de communication utilisant un premier réseau de communication mobile, sur un deuxième canal de communication utilisant un deuxième réseau de communication mobile.

30. Produit programme d'ordinateur téléchargeable depuis un réseau de communication et/ou enregistré sur un support lisible par ordinateur et/ou exécutable par un processeur **caractérisé en ce qu'**il comprend des instructions de code de programme pour l'exécution d'au moins une des étapes du procédé d'établissement d'une session de communication entre au moins un premier terminal client de radiocommunication comprenant des moyens d'accès à au moins un réseau de communication mobile et exécutant une application cliente, et au moins terminal distant de capture et/ou de mise à disposition de données d'information prédéterminées exécutant une application serveur, ladite application cliente et ladite application serveur formant une application distribuée, selon l'une quelconque des revendications 1 à 18, lorsque ledit programme est exécuté sur un ordinateur.
